(19) Europäisches Patentamt
European Patent Office
Office européen des brevets

(11) **EP 2 073 564 A1**

(12) **EUROPEAN PATENT APPLICATION**
published in accordance with Art. 153(4) EPC

(43) Date of publication:
**24.06.2009 Bulletin 2009/26**

(51) Int Cl.:
*H04Q 11/00* (2006.01)       *H04M 11/06* (2006.01)

(21) Application number: **08715400.1**

(22) Date of filing: **03.04.2008**

(86) International application number:
**PCT/CN2008/070668**

(87) International publication number:
**WO 2008/122239 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.04.2007  CN 200710091010**

(71) Applicant: **Huawei Technologies Co., Ltd.**
**Longgang District, Shenzhen**
**Guangdong 518129 (CN)**

(72) Inventors:
• **LIU, Jianhua**
  **Shenzhen**
  **Guangdong 518129 (CN)**
• **ZHOU, Jun**
  **Shenzhen**
  **Guangdong 518129 (CN)**

(74) Representative: **Gulde, Klaus W. et al**
**Anwaltskanzlei**
**Gulde, Hengelhaupt, Ziebig & Schneider**
**Wallstrasse 58/59**
**10179 Berlin (DE)**

(54)    **A METHOD, A DEVICE AND A SYSTEM FOR TRANSMITTING DATA**

(57)    A method, apparatus and system for data transmission include determining an idle data rate under a total data rate during data transmission; determining a corresponding parameter adjusting policy according to the idle data rate and a preset threshold; adjusting an associated parameter during data transmission accordingly according to the parameter adjusting policy; and sending an instruction carrying the parameter adjusting policy to a far end entity so as to instruct the far end entity to adjust the associated parameter during data transmission accordingly. According to various embodiments of the present invention, the system bandwidth is saved and the service quality of the system is improved.

FIG.2

**Description**

FIELD OF THE INVENTION

The present invention relates to electronic communication field, and more specifically, to a method, apparatus and system for data transmission.

BACKGROUND

Currently, digital subscriber line system has wide applications in various aspects of lives and works. Digital Subscriber Line (DSL) technology is a high-speed transmission technology which employs telephone twisted pair wires (also called Unshielded Twist Pair, UTP) to transmit data. The DSL technology includes Asymmetric Digital Subscriber Line (ADSL) technology, Very high speed digital Subscriber Line (VDSL) technology, Digital Subscriber Line based on Integrated Services Digital Network (IDSL) technology, Symmetrical High bite Digital Subscriber Line (SHDSL) technology, etc.

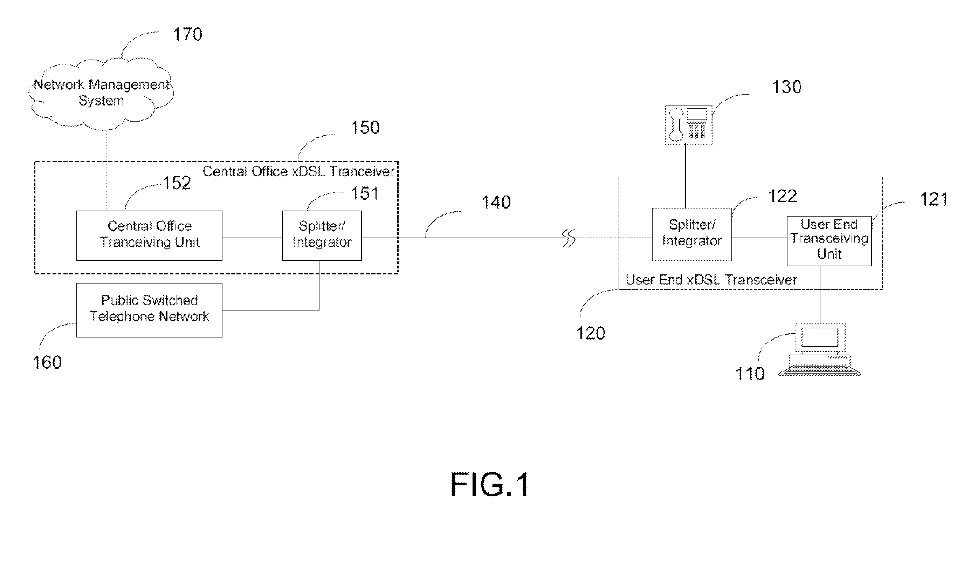

In a DSL system, a DSL Access Multiplexer (DSLAM) may provide multiple DSL accesses so as to construct a network system based on xDSL technology. A framework of the network system is shown in Figure 1, which includes a user end xDSL transceiver 120, a central office xDSL transceiver 150, a Public Switched Telephone Network (PSTN) 160, and a Network Management System (NMS) 170. The xDSL transceiver 120 includes a user end transceiving unit 121 and a splitter/integrator 122. The xDSL transceiver 150 includes a central office tranceiving unit 152 and a splitter/integrator 151.

A data transmission process is illustrated in a diagram in Figure 1. In upstream direction, the user end transceiving unit 121 receives a DSL signal from computer 110, amplifies the received signal, and transmits the processed DSL signal to the splitter/integrator 122. The splitter/integrator 122 integrates the DSL signal from the user end transceiving unit 121 and a Plain Old Telephone Service (POTS) signal from a telephone terminal 130. The integrated signals are transmitted via multiple UTP 140 and are received by the splitter/integrator 151 in the central office xDSL tranceiver 150. The splitter/integrator 151 separates the received signals. The POTS signal in the received signals is transmitted to the Public Switched Telephone Network (PSTN) 160. The DSL signal in the received signals is transmitted to the transceiving unit 152 of the the xDSL transceiver 150. Then, the transceiving unit 152 amplifies the received signal and transmits the amplified signal to the Network Management System (NMS) 170. In downstream direction, signals are transmitted in a reverse order.

The DSL technology, especially the second generation VDSL (VDSL2) technology has extensive applications in transmitting triple play services (e.g., IPTV service). Triple play services requires a lower bit error ratio (BER) than does a traditional data service (e.g., Internet data service).

The DSL technology employs a noise margin technique and a trellis coding technique to eliminate the impact of random noise, and jointly employs a Forward Error Correction (FEC) technique and an interleave technique to eliminate the impact of pulse noises so as to reduce bit error ratio. However, in practice, it is discovered that the BER of the existing DSL system may still not meet the requirement of Standard TV (SDTV) and High Definition TV (HDTV).

Also, in practice, it is discovered that when the BER of the DSL system can not meet the requirement, a lot of idle frames exist in the DSL system, especially in VDSL2 system. These idle frames make no contributions to BER reduction.

Currently, the DSL technology utilizes a huge number of idle frames to fill in the remaining bandwidth so as to solve the problem that the user utilizes only a portion of bandwidth. In this circumstance, the speed of the DSL system does not decrease. Moreover, because these idle frames make no contribution to reducing the BER of user data, the BER of user data is not reduced. The manner of utilizing the idle frames to fill in the remaining bandwidth is not conducive to reducing the BER of user data. As the speed of the DSL system increases, the waste of bandwidth becomes a prominent phenomenon.

To tackle the problem that a huge amount of bandwidth is wasted when the user data rate decreases and moreover the idle frames make no contribution to reducing BER, an L2 mode (save mode or sleep mode) relating to DSL technology is currently used. That is, when the user data rate decreases to a certain degree, L2 mode is enabled. In L2 mode, by lowering transmit power, the DSL line rate is reduced. As such, the energy may be saved, the crosstalk on the neighboring lines may be reduced, and the waste of bandwidth is mitigated. However, this has no impact on the BER. When the user data rate is increased significantly, L2 mode is again switched to L0 mode (normal mode). In order to switch L2 mode to normal mode L0 quickly, the system saves operating parameters in original L0 mode. The L0 mode after switching may use the previous parameters for operation.

However, because the DSL technology utilizes unshielded twisted pair (UTP), the crosstalk between neighboring twisted pair wires is serious. When a DSL service is in L2 mode, and if several neighboring pairs of twisted wires activate the DSL service, the DSL service may suffer from severe crosstalk. When the user data rate increases to such an extent that the L2 mode has to be switched to L0 mode, a huge number of bit errors may usually occur due to a low signal-to-noise ratio (SNR). As a result, the existence of the huge number of bit errors may cause the DSL service to be dropped off line, which means a failure in switching from L2 mode to L0 mode. Because such switching failures occur frequently, L2 mode does not come into an extensive use even though L2 mode is an optional function in ADSL standard. The current VDSL2 standard does not include L2 mode.

In the existing DSL technology, none of these technical solutions solve the problem of bandwidth waste with high BER in the case of a low user data rate. Moreover, there is no existing technical solution to adjust the system bandwidth according to the change in user data rate when the user data rate rises, so as to fully utilize the bandwidth for user data transmission.

SUMMARY

A method, apparatus and system for data transmission are provided according to embodiments of the present invention. The system BER can be reduced and the idle data rate can be decreased when there is a large amount of idle data rate under the total data rate in transmission. Moreover, the user data can be transmitted as much as possible when there are few idle data rate under the total data rate in transmission.

Embodiments of the present invention can be implemented according to the below technical solutions.

A method for data transmission is provided according to one embodiment of the present invention. The method includes determining an idle data rate under a total data rate during data transmission; determining a corresponding parameter adjusting policy according to the idle data rate and a preset threshold; and adjusting an associated parameter during data transmission according to the parameter adjusting policy and transmitting an instruction carrying the parameter adjusting policy to a peer entity so as to instruct the peer entity to adjust associated parameter during data transmission accordingly.

An apparatus for data transmission is provided according to one embodiment of the present invention. The apparatus includes: a monitoring unit adapted to determine an idle data rate under a total data rate during data transmission; a decision-making unit adapted to determine a corresponding parameter adjusting policy according to the idle data rate monitored by the monitoring unit and a preset threshold; an adjusting unit adapted to adjust an associated parameter during data transmission according to the parameter adjusting policy determined by the decision-making unit; and a parameter transmitting unit adapted to transmit an instruction carrying the parameter adjusting policy to a far end entity, so as to instruct the far end entity to adjust an associated parameter during data transmission.

A system for data transmission is provided according to one embodiment of the present invention. The system includes a first communication apparatus and a second communication apparatus.

The first communication apparatus includes: a monitoring unit adapted to determine an idle data rate under a total data rate during data transmission; a decision-making unit adapted to determine a corresponding parameter adjusting policy according to the idle data rate determined by the monitoring unit and a preset threshold; an adjusting unit adapted to adjust an associated parameter during data transmission according to the parameter adjusting policy determined by the decision-making unit; and a parameter transmitting unit adapted to transmit an instruction carrying the parameter adjusting policy to the second communication apparatus;

The second communication apparatus includes: a parameter receiving unit, adapted to receive the instruction carrying the parameter adjusting policy from the first communication apparatus; and a third adjusting unit, adapted to adjust an associated parameter during data transmission according to the parameter adjusting policy carried in the received instruction.

It can be seen from the technical solutions provided by various embodiments of the present invention that the present invention provides a method, apparatus, and system for data transmission to adjust data transmission process according to a determined parameter adjusting policy. Accordingly, the system BER may be declined effectively, the system bandwidth may be saved and the system service quality can be improved.

BRIEF DESCRIPTION OF THE DRAWINGS

Figure 1 is a diagram of network system based on xDSL technology;
Figure 2 is a flowchart according to one embodiment of the present invention; and
Figure 3 is a system diagram according to one embodiment of the present invention.

DETAILED DESCRIPTION

The technical solution of the embodiments of the present invention includes determining an idle data rate under the total data rate during data transmission; determining a corresponding parameter adjusting policy according to the idle data rate and a preset threshold; adjusting an associated parameter during data transmission according to the parameter adjusting policy and transmitting an instruction carrying the parameter adjusting policy to a far end entity so as to instruct the far end entity to adjust the associated parameter during data transmission accordingly. The far end entity may be a data transmitting end or a data receiving end.

The total data rate may include a user data rate. The total data rate may further include at least one of idle data rate and redundancy overhead.

The preset threshold may include a high threshold and a low threshold which are preset according to system BER and other parameter requirements.

Specifically, the idle data rate can be determined by monitoring user data rate and/or idle data rate, or monitoring the ratio of idle data rate to user data rate.

In the case where the idle data rate is higher than the preset high threshold, quite a lot of idle data rate under the total data rate for system transmission needs to be decreased. The determined parameter adjusting policy may include increasing the redundancy overhead in the total data rate with the total data rate unchanged. Adjusting the parameter information may reduce the BER, and increase impulse noise protection (INP). The determined parameter adjusting policy may also be such a policy as to decrease the total data rate in transmission with the user data rate unchanged. Adjusting the parameter information may reduce the BER.

In the case where the idle data rate is lower than the preset low threshold, other unnecessary data rate in the total data rate for system transmission needs to be discarded. These unnecessary data rates may include idle data rate and redundancy overhead when BER is met. The determined parameter adjusting policy is to decrease the redundancy overhead in the total data rate with total data rate unchanged, or, to increase total data rate in transmission.

Specifically, the redundancy overhead can be increased or reduced by adjusting some parameters of the system such as adjusting the redundancy overhead parameter of FEC. Or, the total data rate for system transmission can be increased or reduced by adjusting a bitloading table of at least one subcarrier.

The detailed description of various embodiments of the present invention are made below in connection with the accompanying drawings.

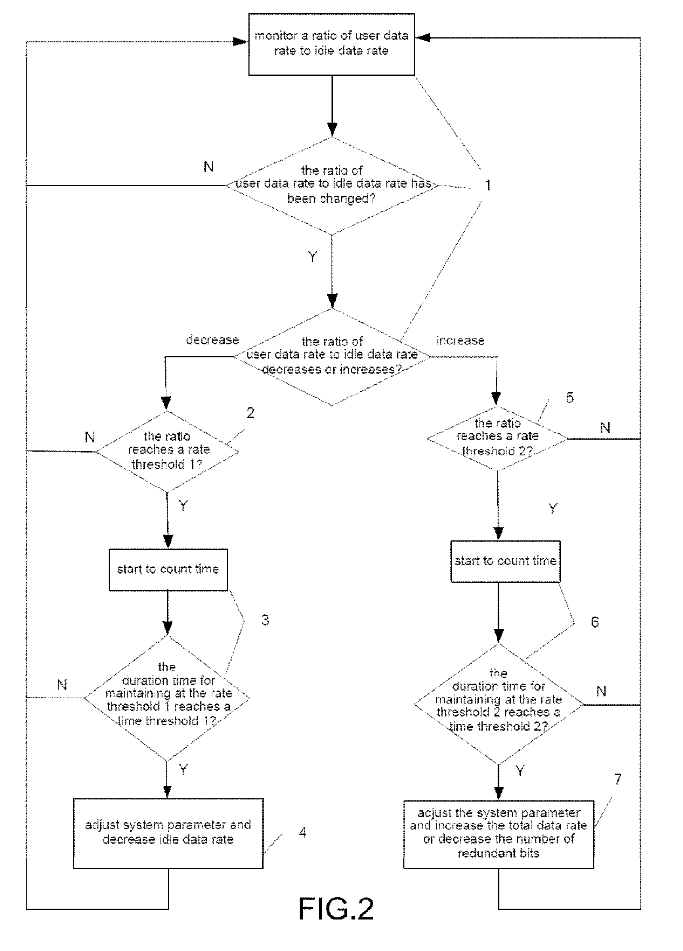

Figure 2 is a flowchart of a method according to one embodiment of the present invention. The method includes the following steps.

Step 1, ratio of user data rate to idle data rate is monitored. If the ratio increases, step 2 is performed. If the ratio decreases, step 5 is performed.

Step 2, whether the ratio reaches a preset rate threshold 1 (i.e., the low threshold of idle data rate) is determined. If the ratio does not reach the preset rate threshold, step 1 is performed; otherwise, step 3 is performed.

Step 3, time-counting is started and whether the duration time for maintaining at the rate threshold 1 reaches a preset time threshold 1 is determined. If the duration time for maintaining at the rate threshold 1 does not reach the preset time threshold 1, step 2 is performed; otherwise, step 4 is performed.

Step 4, the system parameter is adjusted and idle data rate is decreased so that the BER is reduced. The process is over.

Step 5, whether the ratio reaches a preset rate threshold 2 (i.e., the high threshold of idle data rate) is determined. If the ratio does not reach the preset rate threshold 2, step is performed 1; otherwise, step 6 is performed.

Step 6, time-counting is started and whether the duration time for maintaining at the rate threshold 2 reaches a preset time threshold 2 is determined. If the duration time for maintaining at the rate threshold 2 does not reach the preset time threshold 2, step 5 is performed; otherwise, step 7 is performed.

Step 7, the system parameter is adjusted and the total data rate or reduce the number of redundant bits is increased in an allowable BER range. The process is over.

The system may transmit the user data as much as possible when the user data rate is increased. The system may provide users with a better service quality than does the current system when the user data rate is decreased. In one embodiment of the present invention, the user may also be provided with an option between the rate and the service quality. And the way of making the option is very simple. Users may simply close some services so as to improve the quality of the rest of the services. For instance, currently, three HDTVs are running simultaneously. If the service quality is worse (which might be caused by weather change, environment change, etc), one might need to close only one of the HDTV. The service quality of the other two HDTVs is improved considerably. If a higher service quality is desired, one more HDTV may be closed. Consequently, the service quality of the rest HDTV may be further improved.

In the step 4 and step 7, methods of adjusting the redundancy overhead parameter of FEC or adjusting the bitloading table of at least one subcarrier may be adopted in one embodiment of the present invention. The specific implementations with these two methods will be detailed below respectively.

In the case of adjusting the redundancy overhead parameter of FEC, step 4 and step 7 in the embodiments of the present invention are described in detail taking Reed Solomon (RS) coding parameter as an example.

Step 4 may include setting RS coding parameters according to the idle data rate and the RS (a type of coding) parameter supported by the system so as to increase the number of redundant bits in the total data rate. Specifically, step 4 may includes setting at least one parameter in the RS coding parameters, for example, $N_{FEC}$ (denoting the code length of RS ) and R (denoting the number of redundant bytes of RS).

Specifically, setting the $N_{FEC}$ and R can be done in the following way. To ensure the system BER (e.g., BER less than $10^{-7}$), the value of $R/N_{FEC}$ should be larger than value of $R/N_{FEC}$ prior to being set. Moreover, the value of $R/N_{FEC}$ needs to ensure INP larger than $INP_{min}$ (i.e., the minimum INP set by the user) and to minimize the ratio of idle data rate to the user data rate. The INP is calculated according to the following formula when the other parameters remain unchanged and only when the number of redundant bytes R of RS has been changed.

$$INP\_no\_erasure_p = \frac{8 \times D_p \times \left\lfloor \dfrac{R_p}{2 \times q_p} \right\rfloor}{L_p} = \frac{S_p \times D_p \times \left\lfloor \dfrac{R_p}{2 \times q_p} \right\rfloor}{N_{FECp}} \quad \text{DMT symbols}$$

As can be derived from the INP calculation formula, when R increases, the redundancy overhead increases and the value of $R/N_{FEC}$ increases, and thus INP increases. When R decreases, the redundancy overhead decreases and the value of $R/N_{FEC}$ decreases, and thus INP decreases. Meanwhile, the increase in redundancy overhead may also restrain general noises, such as crosstalk.

Step 7 may include the following. When the user data rate increases, e.g., the number of HDTVs used has been changed from one to three, the idle data rate is almost zero. The majority of the total data rate of the system is occupied by the user data rate. Meanwhile, the RS coding parameters $N_{FEC}$ and R are adjusted to meet the requirement of $INP_{min}$, i.e., reduce the ratio of $R/N_{FEC}$. As such, the user data rate can be increased while meeting the requirement of minimum BER, thereby meeting the requirement of the user with a large user data traffic.

In order to allow the receiving end to receive data simultaneously, the receiving end needs to receive information instructing to decrease idle data rate, and decreases the idle data rate for the received data according to the content of the information. The transmitting end may transmit the system parameters which need to be adjusted and the value of the adjusted system parameter by a previous frame carrying RS coding parameter of a next frame (e.g., the modified $N_{FEC}$ and R). For instance, in DSL system, the transmitting end utilizes two bytes having fixed location in a previous Over Head (OH) frame to transmit two parameters $N_{FEC}$ and R of the RS coding parameters of a next OH frame. The receiving end receives the previous OH frame, decodes the OH frame to obtain parameters $N_{FEC}$ and R which will be used for decoding the next OH frame. The method is easy for implementation. For instance, the $4^{th}$ byte of an OH frame may be used to transmit R and N. A fast method is that each OH frame may utilize different R and N. The previous OH frame transmits the R and N of a next OH frame. An alternative method is to set an OH superframe to modify R and N. The transmitting end may repeat R and N several times with the OH frame and transmits to the receiving end. The receiving end may return the R and N to the transmitting end using an OH frame so as to acknowledge a correct reception. Before that, one might predetermine which OH frames are used to forward R and N and which OH frames are used to return R and N. For instance, OH frames with odd numbers may indicate a forward transmission, while OH frames with even numbers may indicate a return transmission.

According to one embodiment, the idle data rate can be utilized by adjusting the ratio of redundant RS bytes to RS bytes so as to improve the INP and reduce the BER.

According to the embodiment, only a few parameters are adjusted. The adjusting speed is fast, and the adjustment has a wide range. Moreover, the service quality of the system can be improved, e.g., BER can be declined, and INP can be improved, etc.

In the case of adjusting bitloading table, step 4 and step 7 of the embodiments of the present invention are detailed below.

Step 4 may include calculating a bitloading table according to the idle data rate. The bitloading table may enable the total data rate in transmission to decrease. For instance, a subcarrier used to load 12000 bits. Now, a subcarrier is set to load only 8000 bits. As such, the SNR margin of this subcarrier is increased such that it may counter heavier non-pulse noise. All the subcarriers may be processed with the same method and a new bitloading table can be obtained. The new bit loading table may be transmitted to the receiving end via an Embedded Operations Channel (EOC). After the receiving end agrees to perform switching, the transmitting end transmits a special synchronization symbol which specifies that both ends may switch an $n^{th}$ symbol after the synchronization symbol to the new bitloading table.

Step 7 may include the following. In the case where the user data rate is increased, for instance, the number of HDTVs used has been changed from one to three. At this point, the idle data rate is almost zero. The majority of the total data rate of the system is occupied by the user data rate. The bitloading table can be switched to the original bitloading table according to the same step as step 4.

The embodiment has a wide range of adjustment. The service quality of the system may also be improved, e.g., the BER may be declined.

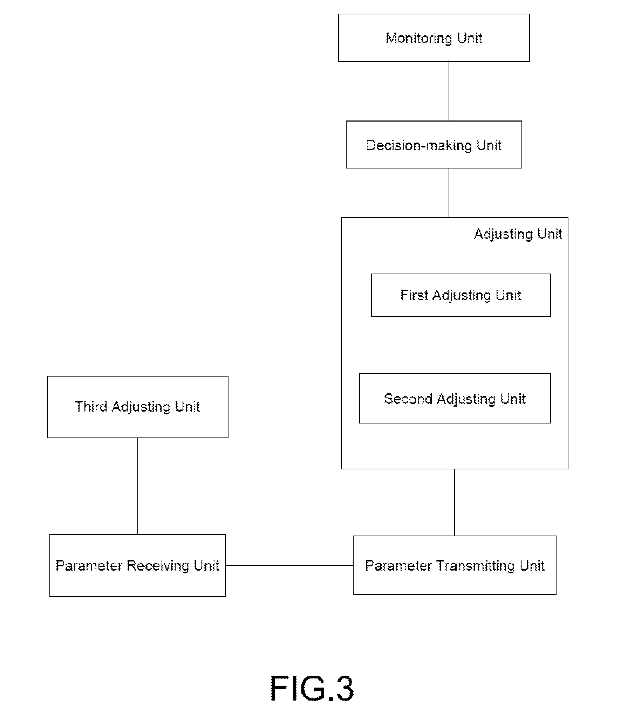

Figure 3 is a flowchart of system implementation according to one embodiment of the present invention. The system includes a first communication apparatus and a second communication apparatus. The first communication apparatus includes a monitoring unit, a decision-making unit, an adjusting unit and a parameter transmitting unit. The second communication apparatus includes a parameter receiving unit and a third adjusting unit.

The monitoring unit is adapted to determine an idle data rate under the total data rate during data transmission.

The decision-making unit is adapted to determine a corresponding parameter adjusting policy according to the idle data rate determined by the monitoring unit and a preset threshold. The parameters relating to the parameter adjusting policy may include a system redundancy overhead parameter, or the number of bits loaded on at least one subcarrier. The redundancy overhead may be RS coding parameters. For instance, $N_{FEC}$ and R.

The adjusting unit is adapted to adjust an associated parameter during data transmission according to the parameter adjusting policy determined by the decision-making unit.

Specifically, the adjusting unit includes: a first adjusting unit, adapted to decrease the idle data rate in the case where the idle data rate is higher than a preset high threshold; and/or a second adjusting unit, adapted to reduce the redundancy overhead in the total data rate while keeping the total data rate unchanged, or increase the total data rate in transmission in the case where the idle data rate is lower than a preset low threshold; a parameter transmitting unit, adapted to transmit an instruction carrying the parameter adjusting policy to the second communication apparatus, so as to instruct the second communication apparatus to adjust an associated parameter during data transmission; a parameter receiving unit, adapted to receive the instruction carrying the parameter adjusting policy from the first communication apparatus; and a third adjusting unit, adapted to adjust the associated parameter during data transmission accordingly according to the parameter adjusting policy carried in the received instruction.

In one embodiment, the first communication apparatus may be located in a Central Office DSL system, or may be located in a user end DSL system. Likewise, the second communication apparatus may be located in a Central Office DSL system, or may be located in a user end DSL system.

In one embodiment of the present invention, the first communication apparatus is a data transmitting apparatus. The second communication apparatus is a data receiving apparatus.

Alternatively, the first communication apparatus is a data receiving apparatus and the second communication apparatus is a data transmitting apparatus.

In conclusion, a method, apparatus and system for data transmission are provided according to embodiments of the present invention. The system BER can be declined, the idle data rate can be decreased when there is a large amount of idle data rate under the total data rate in transmission. Moreover, the user data can be transmitted as much as possible when there is few idle data rate under the total data rate in transmission.

The foregoing are merely exemplary embodiments of the present invention, while the scope of the present invention is not thereto. Any variations or equivalents can be readily appreciated by those skilled in the art. These variations or equivalents shall be construed as fall within the scope of the present invention. Therefore, the scope of the present invention should be determined by the scope of the claims.

**Claims**

1. A method for data transmission, **characterized in** comprising:

   determining an idle data rate under a total data rate during data transmission; determining a corresponding parameter adjusting policy according to the idle data rate and a preset threshold; and
   adjusting an associated parameter during data transmission according to the parameter adjusting policy and transmitting an instruction carrying the parameter adjusting policy to a peer entity so as to instruct the peer entity to adjust an associated parameter during data transmission accordingly.

2. The method of claim 1, **characterized in that**, determining the idle data rate comprises monitoring a user data rate and/or an idle data rate, or monitoring the ratio of an idle data rate to a user data rate so as to determine the idle data rate.

3. The method of claim 1 or 2, **characterized in that**, adjusting a corresponding parameter during data transmission according to the parameter adjusting policy comprises:

   if the idle data rate is higher than a preset high threshold, decreasing the idle data rate;
   if the idle data rate is lower than a preset low threshold, keeping the total data rate constant and decreasing the redundancy overhead in the total data rate, or increasing the total data rate in transmission, .

**4.** The method of claim 3, **characterized in that**, decreasing the idle data rate comprises keeping the total data rate constant and increasing the redundancy overhead in the total data rate, or keeping the user data rate constant and decreasing the total data rate in transmission.

**5.** The method of claim 4, **characterized in that**,

decreasing or increasing the redundancy overhead in the total data rate comprises: setting a system redundancy overhead parameter according to the idle data rate and transmitting the redundancy overhead according to the set redundancy overhead parameter so as to decrease or increase the redundancy overhead in the total data rate; or

increasing or decreasing the total data rate in transmission comprises: setting the total data rate according to the user data rate, or the user data rate and its required number of redundant bits , and transmitting data according to the set total data rate.

**6.** The method of claim 5, **characterized in that**,

when the system redundancy overhead parameter is set according to the idle data rate, the redundancy overhead parameter comprises at least one of RS coding parameters;

in the case of increasing or decreasing the total data rate in transmission, the steps of setting the total data rate comprises setting the number of bits loaded on at least one subcarrier so as to indicate the total data rate.

**7.** The method of claim 1 or 2, **characterized in that**, the far end entity is a data transmitting end or a data receiving end.

**8.** An apparatus for data transmission, **characterized in** comprising:

a monitoring unit, adapted to determine an idle data rate under a total data rate during data transmission;

a decision-making unit, adapted to determine a corresponding parameter adjusting policy according to the idle data rate determined by the monitoring unit and a preset threshold;

an adjusting unit, adapted to adjust an associated parameter during data transmission according to the parameter adjusting policy determined by the decision-making unit; and

a parameter transmitting unit, adapted to transmit an instruction carrying the parameter adjusting policy to a far end entity, so as to instruct the far end entity to adjust an associated parameter during data transmission accordingly.

**9.** The apparatus of claim 8, **characterized in that**, the adjusting unit comprises:

a first adjusting unit, adapted to decrease the idle data rate in the case where the idle data rate is higher than a preset high threshold; and/or

a second adjusting unit, adapted to keep the total data rate constant and reduce the redundancy overhead in the total data rate, or increase the total data rate in transmission, in the case where the idle data rate is lower than a preset low threshold.

**10.** The apparatus of claim 8 or 9, **characterized in that**, the parameter associated with the parameter adjusting policy comprises: a system redundancy overhead parameter; or the number of bits loaded on at least one subcarrier.

**11.** The apparatus of claim 8 or 9, **characterized in that**, the far end entity is a data transmitting end or a data receiving end.

**12.** A system for data transmission, **characterized in** comprising a first communication apparatus and a second communication apparatus, wherein

the first communication apparatus comprises:

a monitoring unit, adapted to determine an idle data rate under the total data rate during data transmission;

a decision-making unit, adapted to determine a corresponding parameter adjusting policy according to the idle data rate determined by the monitoring unit and a preset threshold;

an adjusting unit, adapted to adjust an associated parameter during data transmission according to the parameter adjusting policy determined by the decision-making unit; and

a parameter transmitting unit, adapted to transmit an instruction carrying the parameter adjusting policy to the second communication apparatus;
and the second communication apparatus comprises:
a parameter receiving unit, adapted to receive the instruction carrying the parameter adjusting policy from the first communication apparatus; and
a third adjusting unit, adapted to adjust an associated parameter during data transmission according to the parameter adjusting policy carried in the received instruction.

13. The system of claim 12, **characterized in that**, the adjusting unit comprises:

a first adjusting unit, adapted to decrease the idle data rate in the case where the idle data rate is higher than a preset high threshold; and/or
a second adjusting unit, adapted to keep the total data rate constant and reduce the redundancy overhead in the total data rate, or increase the total data rate in transmission, in the case where the idle data rate is lower than a preset low threshold.

14. The system of claim 12 or 13, **characterized in that**, the parameter associated with the parameter adjusting policy comprises a system redundancy overhead parameter; or the number of bits loaded on at least one subcarrier.

15. The system of claim 12, **characterized in that**,

the first communication apparatus is a data transmitting apparatus and the second communication apparatus is a data receiving apparatus; or the first communication apparatus is a data receiving apparatus and the second communication apparatus is a data transmitting apparatus.

FIG.1

FIG.2

FIG.3

## INTERNATIONAL SEARCH REPORT

| International application No. |
|---|
| PCT/CN2008/070668 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04B1/38; H04H1/00; H04L5/06; H04L5/16; H04L27/26; H04M11/06; H04Q7/24; H04Q11/00; H04Q11/04

Documentation searched other than minimum documentation to the extent that such documents are included in the fields searched

Electronic data base consulted during the international search (name of data base and, where practicable, search terms used)

WPI; EPODOC; PAJ; CNKI; IEE; CPRS
idle, null, data, rate, speed, threshold, predetermined, value, digital, subscriber, line, loop

### C. DOCUMENTS CONSIDERED TO BE RELEVANT

| Category* | Citation of document, with indication, where appropriate, of the relevant passages | Relevant to claim No. |
|---|---|---|
| Y | WO0052894 A1 (ADVANCED MICRO DEVICES) 08 Sep. 2000 (08.09.2000) page 3, line 35 - 39, page 4, line 37 - page 5, line 4, page 5, line 11 - 18, line 29 - 33, page 6, line 11 - 18, figure 1 - 3 | 1-3,7-15 |
| Y | US2003103483 A1 (Joshi, et al) 05 June 2003 (05.06.2003) Abstract, Paragraph [0029] - [0032] | 1-3,7-15 |
| A | US6538994 B1 (Horspool, et al) 25 March 2003 (25.03.2003) Column 3, line 57 - column 4, line 18, figure 3 - 6 | 1-15 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 05 June 2008 (05.06.2008) | **26 Jun. 2008 (26.06.2008)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | GAO,Jing Telephone No. (86-10)62413792 |

Form PCT/ISA/210 (second sheet) (April 2007)

## INTERNATIONAL SEARCH REPORT
Information on patent family members

| | International application No. |
| --- | --- |
| | PCT/CN2008/070668 |

| Patent Documents referred in the Report | Publication Date | Patent Family | Publication Date |
| --- | --- | --- | --- |
| WO 0052894 A1 | 08.09.2000 | None | |
| US 2003103483 A1 | 05.06.2003 | US7327694 B | 05.02.2008 |
| US6538994 B1 | 25.03.2003 | GB2337672 A | 24.11.1999 |
| | | GB2337672 B | 18.12.2002 |

Form PCT/ISA/210 (patent family annex) (April 2007)

## INTERNATIONAL SEARCH REPORT

| International application No. |
|---|
| PCT/CN2008/070668 |

Continuation of second sheet: A. CLASSIFICATION OF SUBJECT MATTER

H04Q 11/00 (2006.01) i
H04M 11/06 (2006.01) n

Form PCT/ISA/210 (extra sheet) (April 2007)

14